(19) Europäisches Patentamt
European Patent Office
Office européen des brevets

(11) **EP 1 556 713 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(21) Anmeldenummer: **03772263.4**

(22) Anmeldetag: **25.10.2003**

(51) Int Cl.:
***G01S 5/06*** (2006.01)

(86) Internationale Anmeldenummer:
**PCT/EP2003/011893**

(87) Internationale Veröffentlichungsnummer:
**WO 2004/038448 (06.05.2004 Gazette 2004/19)**

(54) **VERFAHREN ZUR KONTINUIERLICHEN ECHTZEITVERFOLGUNG DER POSITION VON WENIGSTENS EINEM MOBILEN OBJEKT SOWIE ZUGEHÖRIGE SENDER UND EMPFÄNGER**

METHOD FOR CONTINUOUSLY LOCATING IN REAL TIME AT LEAST ONE MOBILE OBJECT AND TRANSMITTERS AND RECEIVERS FOR CARRYING OUT SAID METHOD

PROCEDE DE LOCALISATION CONTINUE EN TEMPS REEL D'AU MOINS UN OBJET MOBILE ET EMETTEURS ET RECEPTEURS ASSOCIES

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**MK**

(30) Priorität: **28.10.2002 DE 10250243**
**29.10.2002 DE 10250500**
**14.11.2002 DE 10252934**

(43) Veröffentlichungstag der Anmeldung:
**27.07.2005 Patentblatt 2005/30**

(73) Patentinhaber: **Fraunhofer-Gesellschaft zur Förderung der angewandten Forschung e.V.**
**80686 München (DE)**

(72) Erfinder:
• **COURONNE, Sylvia**
**91058 Erlangen (DE)**
• **BLIESZE, Marcus**
**91058 Erlangen (DE)**

• **HOFMANN, Günter**
**96123 Litzendorf (DE)**
• **EBERLEIN, Ernst**
**91091 Grossenseebad (DE)**
• **KOEHLER, Stefan**
**96472 Rödental (DE)**
• **VON DER GRÜN, Thomas**
**91077 Sendelbach (DE)**
• **BREILING, Marco**
**91054 Erlangen (DE)**
• **RETKOWSKI, Reiner**
**91052 Erlangen (DE)**

(74) Vertreter: **Reinhardt, Harry et al**
**Reinhardt & Pohlmann Partnerschaft,**
**Grünstrasse 1**
**75172 Pforzheim (DE)**

(56) Entgegenhaltungen:
**US-A- 5 150 310**      **US-A- 6 041 046**
**US-B1- 6 204 813**

**Beschreibung**

Die Erfindung betrifft Verfahren zur kontinuierlichen Echtzeitverfolgung der Position von wenigstens einem mobilen Objekt in einem definierten mehrdimensionalen Raum nach dem Oberbegriff des Anspruches 1 sowie zugehörige Vorrichtung nach dem Oberbegriff des Anspruches 16.

Seit geraumer Zeit besteht bei unterschiedlichen Interessengruppen das Anliegen, bewegte Objekte bzw. Personen in Ihrem Bewegungsablauf studieren bzw. diesen nachvollziehen zu können, was die exakte Angabe der Position des Objekts örtlich und zeitlich voraussetzt. Von besonderem Interesse sind hierbei unter anderem Spielbälle insbesondere in kommerzialisierten Sportarten, wie z.B. die im dreidimensionalen Raum hoch beschleunigten Fußbälle ebenso wie Tennis- oder Golfbälle. Die Fragestellung, wer das bespielte Objekt zuletzt berührt hat, wie es getroffen wurde und in welche Richtung es weiterbeschleunigt wurde, kann dabei abhängig von der Spielart für den Ausgang des Spiels entscheidend sein. Spielgeräte, die im Hochleistungssport eingesetzt werden wie z.B. Tennisbälle, Golfbälle, Fußbälle und dergleichen, lassen sich dabei inzwischen auf extrem hohe Geschwindigkeiten beschleunigen, so dass die Erfassung des Objekts während der Bewegung eine sehr differenzierte Technologie erfordert. Die bislang eingesetzten technischen Mittel - vorwiegend Kameras - genügen den oben dargestellten Erfordernissen nicht oder nur ungenügend; auch die bislang bekannten Verfahren zur Positionsbestimmung mittels unterschiedlicher Sender-und Empfängerkombinationen lassen noch einen großen Spielraum bezüglich der räumlichen Auflösung der Positionsangaben, bezüglich der Handhabbarkeit der benötigten Sender/Empfängertcomponenten und vor allem bezüglich der Auswertung der mittels Sender/Empfängersystem erhaltenen Daten, so dass eine schnellstmögliche Bewertung der aus diesen Daten erhaltenen Ergebnisse noch nicht möglich ist.

Ein System zur Lokalisierung eines mobilen Objekts, wie Spielern und Ball eines Ballspiels in einem vorgegebenen Spielfeld ist in US-Patent 6,204,813 B1 offenbart. Es zeigt ein Positionserfassungssystem, das im Zeitmultiplexverfahren arbeitet. Ein Spreizspektrumtransceiver ist einem mobilen Objekt zugeordnet, das über wenigstens drei auf Antennen angeordnete Transceiver hinsichtlich seiner Position erfasst wird. Sowohl mobiles Objekt als auch die Antennen beinhalten Sender und Empfänger, so dass eine Kommunikation in zwei Richtungen mit einem Rückkanal erfolgt, der vorzugsweise ein Polling der Daten des Senders steuert. Alternative Spreizbandtechniken werden auch in Kombination vorgeschlagen.

Aus der EP 700 525 B1 ist eine Positionsbestimmung von zellularen Telefonen bekannt, wobei die Gebiete jedoch wenigstens 0,5 bis 20 Meilen voneinander beabstandet sind. Hauptproblem bei der Navigation dieser Telefone ist, dass die Navigation einen möglichst kleinen Teil der Kapazität beanspruchen soll, da die Kapazität anderweitig für die Bewältigung der Grundaufgaben solcher Telefone, nämlich die Sprachübermittlung benötigt wird. Bei Zellulartelefonen teilen sich die Sender die gleiche Frequenz nach dem TDMA-Prinzip, dies setzt aber voraus, dass die Sender synchronisiert bzw. initiiert sind, es entstehen hier keine Interferenzen zwischen den Sendesignalen. Es ergeben sich dadurch für diese Technologie Randbedingungen, die sich Grund legend unterscheiden von denen, die entstehen, wenn die Aufgabe der Ortung eines Spielballs in einem Feld von wenigen Quadratmetern bewältigt werden soll. Hier liegt das Augenmerk auf der Bereitstellung eines Systems hoher Genauigkeit, das so robust ist, dass es geeignet ist, in einem bespielten und hochbeschleunigten Objekt bewegt zu werden. Eine Skalierung zur Anpassung an den hier vorliegenden Einsatzzweck der in der EP 700 525 B1 dargelegten Technologie schließt sich daher aus und würde nicht zu einer Erhöhung der Genauigkeit ggf. auch im dreidimensionalen Raum bei einem zugleich robusten System führen.

Auch die EP 514 511 B1 beschreibt die Ortsbestimmung von Funktelefonen, jedoch an Hand von alternativen Kriterien im Rahmen eines Verfahrens zur Gesprächsumlegung in einem zellularen Mobilfunktelefonsystem. Diese Schrift fokussiert sich auf die Auffindung von Zellen, welche einen speziellen Standard gemäß eines Funksignalpegelkriteriums erfüllen, auf welche die ausgewählte Zelle umgelegt werden soll. Es wird hier ebenfalls die sehr rasch erfolgende Aussendung einer elektromagnetischen Welle, der so genannte Sendeburst, verwendet. Grundsätzlich ist die Problematik, auf Grund derer sich die in dieser Schrift dargelegte Technologie nicht zur Problemslösung für die zentimetergenaue Ortung eines Spielballs in einem Feld eignet, die selbe wie die im Zusammenhang mit der EP 700 525 B1 dargelegte.

In der Schrift von E. Kramar. Funksysteme für Ortung und Navigation, 1973, Verlag Berliner Union GmbH Stuttgart, S. 91 - 92 wird dargelegt, dass bei Ortungsempfängern z. B. für das Omega-System zur Positionsbestimmung eines mobilen Objekts Geradeaus-Empfänger verwendet werden.

In der DE 44 09 178 A1 wird das Grundprinzip der Ortsbestimmung über Laufzeitmessung erläutert. Diese ist jedoch nicht hilfreich, die Aufgabe der kontinuierlichen Echtzeitverfolgung der Position von einem mobilen Objekt in einem definierten mehrdimensionalen Raum zu lösen, wenn es um eine Erhöhung der Genauigkeit geht.

In der US 6_041 046 wird ein TDMA-System beschrieben, das eine Vielzahl von Anwender-stationen umfasst, die mit einer Basisstation kommunizieren. Hierzu werden ebenfalls Sendeimpulse übertragen. Es geht aus der Schrift jedoch kein Ansatz hervor, mit dessen Hilfe die kontinuierliche Echtzeitverfolgung der Position eines mobilen Objekts, insbesondere eines Spielballs, in einem definierten mehrdimensionalen Raum wie einem Spielfeld zu lösen ist.

Die DE 200 04 174 U1 offenbart ein Spielgerät, insbesondere einen Ball, in dessen Innenraum ein Sender installiert ist. Die Technologie dieses Systems basiert auf der Reflexion elektromagnetischer Wellen zwischen Sendern und Empfängern und ist nicht zum Lösen der dargelegten Problematik geeignet; die Sende- und Empfangselemente dieser Technologie sind zur Kommunikation mittels Reflexion ausgestattet.

In der EP 0 880 712 B1 wird ebenfalls ein System zur Positionsbestimmung beschrieben. Es ist ebenfalls nicht zur Bestimmung einer Position eines bewegten Objekts im Zentimeterbereich in Echtzeit geeignet.

Als weitere Navigations- oder Ortungssysteme sind bisher nachstehend genannte Technologien bekannt, die jedoch für die genannten Anwendungsbereiche nicht geeignet sind, da sie sich entweder für eine reflexions- und dämpfungsbehaftete Umgebung nicht eignen oder die Angabe der Position abhängig von den Empfangsbedingungen nicht genau genug für die genannten Anwendungen angegeben werden kann.

Es gehören hierzu:

- GPS ähnliche Systeme: Ein mobiler Empfänger empfängt gleichzeitig die Signale von mindestens 3 Sendern; aus den Differenzen der "Time-of-Arrival" (TOA) kann der Empfänger seine Position bestimmen. Für den o.g. genannten Anwendungsfall müsste jeder Empfänger mit einem Transmitter ausgerüstet werden, der fortlaufend die Position an einen Zentralrechner überträgt. Dazu wird die vollständige Navigationsberechnung in den mobilen Transceiver Modulen durchgeführt, was einer komplexen Signalverarbeitung mit hoher Rechenleistung und größtem Speicherbedarf entspricht. Ein solches System ist in US-A 5,438,518 offenbart. Um eine erhöhte Positionsgenauigkeit zu gewährleisten werden dazu Signalmerkmale über das zu betrachtende Feld digital zentral gespeichert und die Signalcharakteristik der empfangenen Signals mit den gespeicherten Informationen korreliert. Nachteilig ist hier die erhebliche und wohl kaum durchführbare Miniaturisierbarkeit des Systems. (s.a. DE 100 53 959 A1, WO 02/037134 A)

- Radarsysteme: Laufzeitmessung mit (aktiven) Transpondern bzw. Tags. Ein Sender am Rand des Spielfeldes sendet einen Impuls aus, der vom bewegten Objekt empfangen wird und der nach einer bestimmten Zeit ein Echo zurückwirft. Aus der Gesamtlaufzeit des Signals kann dann der Abstand zwischen Sender und bewegtem Objekt bestimmt werden. Siehe hierzu US-A 4,660,039. Die gleichzeitige Verfolgung mit hoher Zeitauflösung von vielen Objekten ist mit dieser Technologie sehr schwierig.

- Richtantennen: Die bewegten Objekte werden über Antennen mit sehr hohen Richtwirkungen verfolgt, wobei sie Signale aussenden, die auf die Empfangsantennen ausgerichtet sind. Wenn mindestens zwei Antennen verwendet werden, kann über die Winkel der Antennenausrichtung die Position bestimmt werden. Dieses Prinzip ist in US-A 5,513,854 für die Ortung von Athleten auf einem Spielfeld beschrieben. Das US-A 5,583,517 beschreibt ein auf dem selben Prinzip basierendes System, wobei der mobile Transmitter das Signal auf viele unterschiedliche Träger spreizt, die resultierenden Signale werden im Empfänger rekombiniert, um resistent gegenüber Mehrwegausbreitung zu sein. Nachteilig ist, dass eine geeignete Auflösung nur dann erzielt wird, wenn extrem hohe Frequenzen (-> Licht) verwendet werden.

- Optische Systeme: Die Objekte werden über mehrere Kameras verfolgt. Die Verfolgung selber kann automatisch über Bildverarbeitung (Mustererkennung) oder über elektromagnetische Technologie (Magnetische Sensoren) erfolgen. Über die Bildauswertung kann die Position errechnet werden. Problem: Optische Systeme können nur die Position bestimmen, wenn die Objekte nicht durch Hindernisse verdeckt sind. Die Ortung kann derzeit auch nicht automatisch und online ausgewertet werden.

- Feldstärke-Messungen anhand von Barken o.a.: Auf dem Spielfeld sind sehr viele Empfänger (oder Sender) verteilt ("Barken"). Die Feldstärke des Signals entspricht dem Abstand zwischen den Barken und dem bewegten Objekt. Aus den Feldstärken kann dann die Position berechnet werden. Nachteilig ist, dass für eine hohe Auflösung sehr viele Barken installiert werden müssen.

- Aus der DE 100 54 282 A1 ist ein Verfahren sowie eine Vorrichtung zum Bestimmen der Position, Orientierung und/ oder Verformung eines Objektes bekannt, bei dem ein oder mehrere Signalgeber am Objekt angeordnet sind, die elektromagnetische Signale aussenden. Die Ansteuerung der Signalgeber ist derart gestaltet, dass die einzelnen Signale voneinander unterscheidbar sind. Sie werden auf wenigstens einen zweidimensional auflösenden Lagedetektor (PSD) projiziert, dort in zweidimensionale Lagekoordinaten umgewandelt und dann in Informationen zu Position, Orientierung und/oder Verformung des Objekts überführt. Das System ist recht aufwändig und arbeitet im Wesentlichen dennoch nur zweidimensional.

Der Erfindung liegt die Aufgabe zu Grunde, ein Verfahren zur kontinuierlichen Echtzeitverfolgung der Position von wenigstens einem mobilen Objekt in einem definierten dreidimensionalen Raum mit sehr hoher Ortsauflösung und einer zeitlichen Auflösung von wenigen Millisekunden zu einer kontinuierlichen Verfolgung der Position eines oder mehrerer mobiler Objekte und/oder Personen zu jeder Zeit und an jedem Ort zu schaffen.

Diese Aufgabe wird durch ein Verfahren zur kontinuierlichen Echtzeitverfolgung mit den Merkmalen des Anspruches 1 sowie eine zugehörige Vorrichtung mit den Merkmalen des Anspruches 16 gelöst.

Die Nutzung des Frequenzbandes als einziger Kanal, gleichbedeutend damit, dass alle Sender das gleiche Band nutzen, ermöglicht eine höhere Übertragungsrate und damit Abtastrate zur Erhöhung der Ortsauflösung und zeitlichen Auflösung, die erforderlich ist, um auch Objekte mit Geschwindigkeiten von z.B. bis zu 150 km/h zu erfassen. Für die Kommunikation von Sender und Empfänger wird damit eine zur Verfügung stehende Bandbreite eines Frequenzbandes zur Erzielung maximaler Genauigkeit genutzt. Dennoch sollen die Komponenten des in der Erfindung enthaltenen Systems robust, kompakt und geschickt handhabbar, von möglichst geringer Größe und außerdem widerstandsfähig gegen mechanische z.B.

Stöße oder chemische Belastung wie z.B. auch Körperschweiß sein. Ein Ziel ist auch, diese Komponente in einem Ball zu integrieren. Um dies zu erreichen, erfolgt die Kommunikation zwischen Sendern und Empfängern (E1,..., En) auf dem Prinzip des pseudo-zufälligem Zeitmultiplex mit Sendebursts (B) von niedriger Kreuzkorrelation mit nicht synchronisierten Pseudozufallsmustern. Insbesondere die nicht synchronisierte Kommunikation erlaubt einen robusteren Aufbau insbesondere der am stärksten belasteten Sender, da all die Komponenten, die im Stand der Technik zur Synchronisierung benötigt werden, weg fallen. Das zufällige Zeitmultiplex und die nicht synchronisierten Zufallsmuster erhöhen in ihrer Kombination deutlich die Ortungsgenauigkeit zur Vermeidung der Mehrwegübertragung. Werden aber mehrere Sender, z.B. bei einem Fußballspiel etwa 100 Sender, erforderlich, um Spieler und Ball zu erfassen, lassen sich die dann anfallenden Datenmengen nur auf diesem Wege mit der entsprechenden Genauigkeit erfassen und übertragen.

Es handelt sich damit um ein drahtloses funkbasiertes System, das aus mobilen Sender-Modulen besteht, die an den mobilen Objekten des zu analysierenden Systems angebracht werden und deren Signale von einem festen Empfänger- und Signalverarbeitungsnetzwerk empfangen und zentral verarbeitet werden.

Von besonderer Bedeutung ist hierbei, dass die Kommunikation zwischen Sendern und Empfängern über den Mechanismus des pseudo-zufälligen Zeitmultiplex mit Sendebursts niedriger Kreuzkorrelation mit nicht synchronisierten Pseudozufallsmustern realisiert wird, die z.B. als eine Kombination der Zugriffsmechanismen Zeitmultiplex und Codemultiplex verstanden werden kann (Anspruch 10). Beim Zeitmultiplex (TDMA) (s.a. US-A 6,204,813) senden die Sender der bewegten Objekte im Zeitmultiplex, so dass jeder Sender auch einen Empfänger enthalten muss, der dem Sender einen Synchronisationsimpuls zur Verfügung stellt, von dem dann der Zeitpunkt des Sendebursts abgeleitet wird. Jeder Sender verwendet eine andere pseudozufällige Folge für den Sendezeitpunkt, so dass sich immer unterschiedliche Sender überlagern, bzw. zu anderen Zeitpunkten keine Überlagerung auftritt. TDMA setzt also ein sehr gleichmäßiges Muster ein, das für die einzelnen Sender die gleiche Periode hat und die Perioden synchronisiert. Durch eine "Phasenverschiebung" der Perioden erreicht man dann, dass niemals die Sender gleichzeitig senden. Das setzt aber wieder voraus, dass die Sender synchronisiert sind. Beim Codemultiplex (CDMA) werden für die Sender orthogonale Spreizsequenzen verwendet, so dass die Sender nicht synchronisiert werden müssen. Bei unterschiedlich entfernten Sendern wird jedoch das Signal des weiter entfernten Senders durch das des näheren überdeckt.

Die Anwendung nicht synchronisierter Pseudozufallsmuster vereinfacht die Gestaltung der Sender, da ein Empfänger für das Aufnehmen eines Synchronimpuls nicht benötigt wird. Allerdings ergibt sich durch das Unterlassen der Synchronisierung eine Verschiebung der Zufallsmuster gegeneinander, was das Einhalten der Bedingung erschwert, dass möglichst wenige Sender zeitgleich aktiv sein sollen, da alle Sender das gleiche Band nutzen; d. h. das Auffinden geeigneter Zufallsfolgen wird erschwert. Dieses Problem der bei nicht synchronisierten Sendern zwischen den Sendesignalen entstehenden Interferenzen tritt bei Mobiltelefonen nicht auf, da die Signalübertragungen initiiert (= synchronisiert) werden. Dieses Problem wird erfindungsgemäß jedoch gelöst durch die Verwendung von Sequenzen mit niedriger Kreuzkorrelation, welche die Trennung der Signale durch die Erkennungssequenz des Senders ermöglichen, die einem gewissen Teil des Sendebursts entspricht, falls es tatsächlich vorkommt, dass mindestens zwei Sender gleichzeitig ein Signal absetzen. Durch die hohe Impulsrate kann das System ohne weiteres auf einzelne Werte verzichten, wenn diese nicht detektiert werden können. Insgesamt können damit hohe Kapazitäten des Systems für die Signalübertragung zur Navigation verwendet werden.

Bei einer Ausgestaltung nach Anspruch 12 werden sämtliche Senderempfangsdaten erfasst und gespeichert. Aufgrund der gespeicherten Daten ist damit bedarfsweise auch eine Nachbearbeitung möglich, um gegebenenfalls genauere Algorithmen entsprechend auf bestimmte z.B. entscheidungserhebliche Situationen anzuwenden.

Weitere Vorteile ergeben sich aus dem Unteransprüchen.

Kurzbeschreibung der Figuren

Im Folgenden wird die Erfindung anhand der beigefügten Figuren näher erläutert. Es zeigen:

Fig. 1     eine schematische Draufsicht auf ein Spielfeld mit Empfängern und Sendern,

Fig. 2     den Suchbereich für die Abtastung eines Sendeburst,

Fig. 3     ein Empfängernetzwerk,

Fig. 4     eine Sendereihenfolge verschiedener Sender,

Fig. 5     eine Darstellung der Anordnung der Empfänger,

Fig. 6     die die Sender und Empfänger verknüpfenden Netzwerke,

Fig. 7     eine schematische Darstellung der Sendebursterzeugung,

Fig. 8     eine schematische Darstellung eines Empfängers.

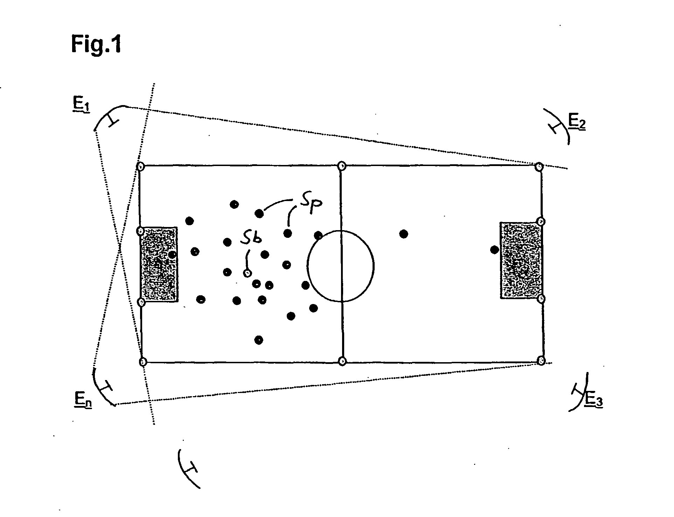

In den Figuren wird ein Verfahren zur kontinuierlichen Echtzeitverfolgung der Position von wenigstens einem mobilen Objekt in einem definierten mehrdimensionalen, hier dreidimensionalen Raum erläutert. Als mobiles Objekt sind in Fig. 1 ein Spielobjekt, hier ein Fußball, gekennzeichnet durch seinen Sender Sb, sowie ein Spieler, gekennzeichnet durch seinen Sender Sp, dargestellt. Wenngleich im Folgenden das Verfahren anhand eines Fußballs und der Spieler eines Fußballspiels als mobile Objekte erläutert wird, so ist darauf hinzuweisen, dass gleichwohl auch andere Anwendungsgebiete denkbar sind, in denen es um die Erfassung sich bewegender Objekte mit hoher Ortungsgenauigkeit und zeitlicher Auflösung, also um die Erfassung hoch dynamischer Bewegungsabläufe geht. Eine Beschränkung auf den Einsatzbereich im Sport erfolgt durch die folgende Erläuterung nicht.

Das wenigstens eine mobile Objekt kann zunächst einmal der Sender Sb im Fußball sein, wenn es allein darum geht, die Bewegung des Fußballs zu erfassen. Zur Auswertung von Spielabläufen oder zu Studien der Spielerbewegung ist es jedoch auch sinnvoll, wenn ergänzend die Spieler selbst zu mobilen Objekten werden, bei denen z.B. in den Schienbeinschonern Sender Sp angeordnet sind, um die Bewegung und Bewegungsrichtung der Spieler erfassen zu können. Damit liegen unmittelbar statistisch auswertbare Daten z.B. über Laufwege der Spieler oder Geschwindigkeit von Spieler und Ball vor. Es lässt sich z.B. berechnen, wie dicht der Ball das Tor verfehlt hat. Auf der Basis dieser Daten lassen sich sogar neue Videospielformen entwickeln. Ferner ergeben sich Hilfestellungen zur Optimierung von Spieltaktiken und Trainingskonzepten. Da die Daten auch spielerspezifisch vorliegen können objektive Leistungsdatenbanken oder ein persönliches Trainingskonzept erstellt werden. Aber auch das Spielgerät kann bezüglich seiner Eigenschaften näher betrachtet und optimiert werden.

Dies hat zur Konsequenz, dass ein umfangreiches Netzwerk erforderlich ist, das z.B. aus 8 Empfängern E, $E_1$ - En besteht, die ein Empfängernetzwerk RN bilden, und die Laufzeitdaten von bis zu 100 Sendern S, Sb, Sp, S1 - S6 umfasst. Ferner sind Referenzsender $R_1$ bis $R_n$ erforderlich, um z.B. die Infrastruktur zu kalibrieren. Da sich das mobile Objekt, hier z.B. der Fußball, mit Geschwindigkeiten bis zu 150 km/h bewegen kann, ist zumindest für den Ballsender eine hohe Wiederholrate eines Sendeburst von 0,5 ms erforderlich, was bei einer Bewegung des Balls mit 150 km/h einer Ortsauflösung von 2 cm entspricht. Dieser Sendeburst enthält sämtliche für die Identifikation und Ortung des Senders erforderlichen Daten, worauf noch eingegangen wird. Das System wird damit bei hoher Genauigkeit echtzeitfähig, so dass eine kontinuierliche, zeitnahe Datenlieferung z.B. zur Unterstützung des Schiedsrichters und für Fernsehbilder erst möglich wird. Die endgültige Entscheidung bleibt aber dem Schiedsrichter überlassen.

Vorzugsweise erfolgt die Übertragung der Daten im Frequenzbandbereich von 2,4 GHz, wobei vorzugsweise die Bandbreite von 80 MHz als einziger Kanal zur Maximierung der Ortungsgenauigkeit genutzt wird. Hierzu wird an dem mobilen Objekt ein mobiles Sendermodul angebracht, dessen Signale von einem stationären Empfänger- und Signalverarbeitungsnetzwerk empfangen und zentral verarbeitet werden. Die von dem Sendemodul emittierten Signale sind elektromagnetische, im Zeitmultiplexverfahren ausgesandte Wellen. Zur Erhöhung der Übertragungsmöglichkeiten und der Ortungsgenauigkeit erfolgt die Kommunikation zwischen Sendern S, Sp, Sb und Empfängern $E_1$ - $E_n$ auf dem Prinzip des pseudo-zufälligen Zeitmultiplex mit Sendebursts B von niedriger Kreuzkorrelation mit nichtsynchronisierten Pseudozufallsmustern. Die Ortungsgenauigkeit kann auch dadurch verbessert werden, dass die relevanten Rohdaten gespeichert werden und angepasst in Navigationsalgorithmen eingesetzt werden. Durch die Speicherung ist es z.B. möglich, iterativ die Genauigkeit zu verbessern oder die Daten von besonderem Interesse, z.B. einem Torschuss mit aufwendigeren Algorithmen zu analysieren.

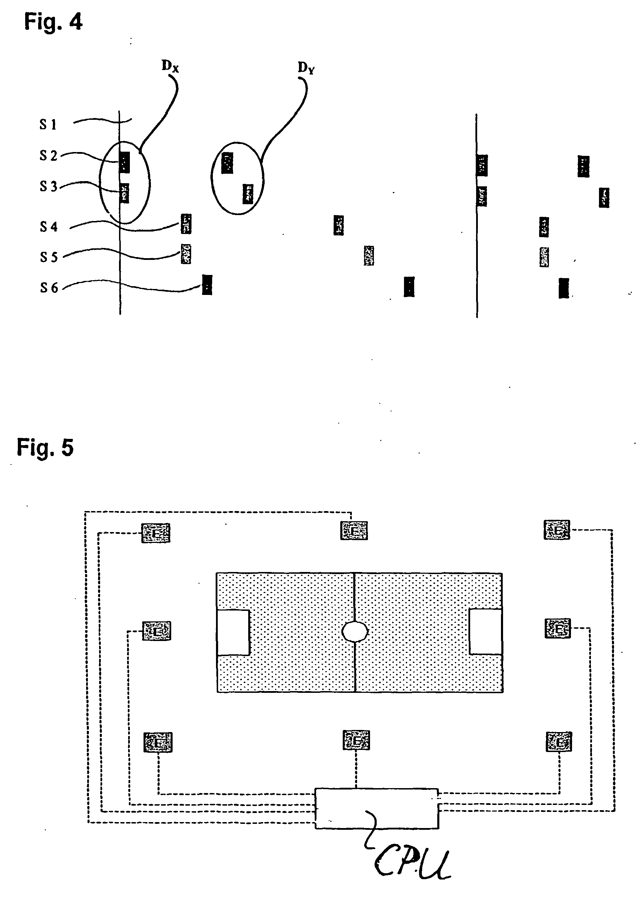

Um eine hohe Ortsauflösung entsprechend einer hohen Genauigkeit der Laufzeitmessung zu erhalten, wird ein Signal mit möglichst hoher Bandbreite verwendet. Da die verfügbare Bandbreite aber begrenzt ist, müssen sich die Sender das verfügbare Spektrum nach dem Codemultiplex- und Zeitmultiplex-Prinzip teilen. Da die Empfangszeit vorzugsweise nicht synchronisiert ist, senden die Sender zu zufälligen, bzw. pseudo-zufälligen, vereinzelten Zeitpunkten; die Folgen dieser Sendezeitpunkte sind - im Gegensatz zum alleinigen Einsatz von TDMA - nicht synchronisiert. Jeder Sender verwendet eine andere pseudozufällige Folge für den Sendezeitpunkt, so dass sich immer unterschiedliche Sender überlagern, bzw. zu anderen Zeitpunkt keine Überlagerung auftritt. Zufällige Überlagerungen werden in Kauf genommen, wie dies insbesondere Figur 4 verdeutlicht. Gemäß Detail $D_X$ senden die Sender S2, S3 gleichzeitig, während sie gemäß Detail $D_Y$ zeitversetzt senden. Derartige Überlagerungen können mehrfach vorkommen, sind jedoch auf Grund der entsprechenden Abtastrate zugunsten der erhöhten Robustheit der Sender als auch ihres kompakten Aufbaus akzeptabel. Alle Sender Teilen sich die gleiche Frequenz, damit für jeden Sender die volle Bandbreite zur Verfügung steht, da die pro Sender verfügbare Bandbreite die Genauigkeit bestimmt. Die Kombination "alle Sender nutzen das

**EP 1 556 713 B1**

gleiche Band" und "die Sender sind nicht synchronisiert" führt gleichzeitig zu der gewünschten Genauigkeit und Robustheit des Systems.

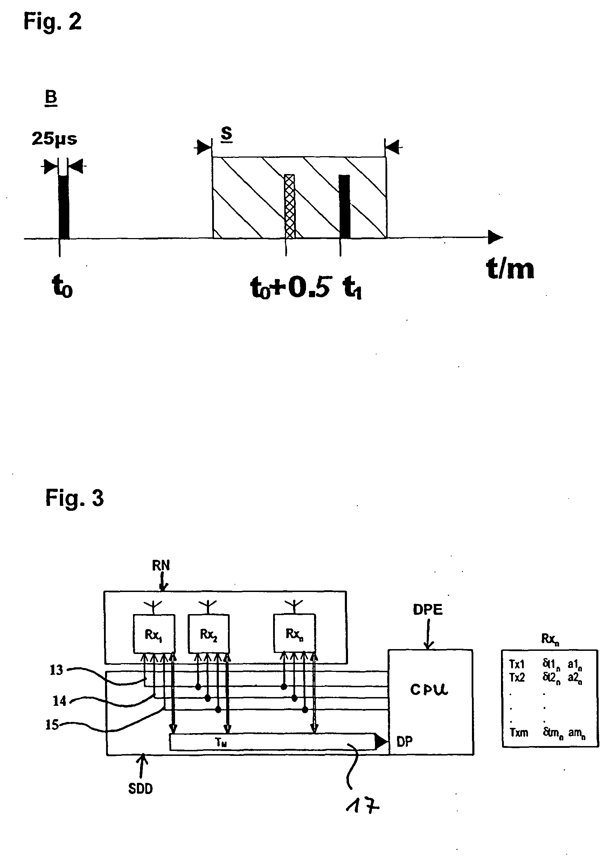

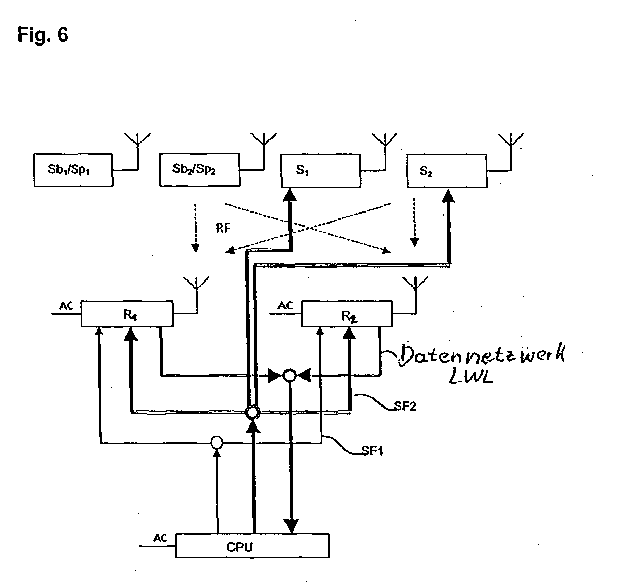

Jeder Sender sendet zu einem Sendezeitpunkt nur einen kurzen Sendeburst B, der von den Empfängern $E_1$ - $E_n$ erfasst wird. Ortsfeste Referenzsender R1 bis Rn beziehungsweise $Rx_1$ bis $Rx_n$ in Fig. 3 dienen als Positionsreferenzen zur Fehlerminimierung und zur Kalibrierung des Systems. Diese senden ebenso wie der wenigstens eine mobile Sender Sb, Sp des beweglichen Objekts einen Idenfifizierungscode und Signale aus, die zur Ermittlung ihrer Laufzeit von Empfänger detektiert werden. Die Referenzsignale werden über eine Signalfrequenz SF2 von im Ausführungsbeispiel 250 MHz synchronisiert. Ferner sind die Empfänger gemäß Fig. 6 ebenfalls über eine Signalfrequenz SF1 von im Ausführungsbeispiel 25 MHz gemäß Fig. 6 miteinander synchronisiert. Die Empfänger, die gemäß Fig. 3 in einem Empfängernetzwerk RN angeordnet sind, erhalten damit über die Taktleitung 13 eine erste Information, über die Leitung 14 eine Zeitmarke und über die Leitung 15 ihre Energieversorgung. Die auf Grund dieser Informationen erfassten Daten werden mit den detektierten Signalen über die Datenleitung 17 an den Datenport DP einer Zentralrecheneinheit CPU übermittelt, so dass sich aus den ermittelten Signalen die Position des mobilen Objekts bestimmen lässt. Der Block $Rx_n$ neben Fig. 3 zeigt eine Matrix, in der $\delta tm_a$ die Zeitdifferenz relativ zur letzten Zeitmarke für jede empfangene Sender ID ist und in der $am_n$ die Information bezüglich der Qualität der Korrelation zu Zwecken der hard-/soft-Entscheidung im Controller gibt. Vor dem Spiel kalibriert der Controller C die wechselseitige Übertragungszeit der Empfänger Rx und synchronisiert das Empfänger-Netzwerk RN. Mit Hilfe des Controllers C wird die Position der relativen wechselseitigen Übertragungszeit von Rx berechnet.

Es werden wenigstens vier Empfänger benötigt, um in einem dreidimensionalen Raum ein Objekt zu orten. Laufzeitdifferenzen werden an den jeweiligen Empfängern erfasst. Die geometrische Lösung der Positionsbestimmung lässt sich über die Lösung eines hyperbolischen Gleichungssystems bestimmen. Die Referenzsignale werden über Kabel, vorzugsweise Glasfaserkabel verteilt. Die mobilen Sendermodule der Sender S, Sp, Sb emittieren zeitbegrenzte Sendesignale als Sendebursts B. Die Sendebursts B werden unter Anwendung nicht synchronisierter Pseudozufallsmuster gesendet, die eine Kombination der Zugriffsmechanismen Zeitmultiplex und Codemultiplex sind, um dadurch die vorhandene Bandbreite möglichst voll umfänglich zu nutzen. Zur Verringerung von Überlagerungen werden Pseudozufallsmuster verwendet, die vorzugsweise Primzahlenfolgen sind. Die kleineren Primzahlen werden dabei den sich schneller bewegenden Sendern, also im Ausführungsbeispiel dem Sender Sb im Ball zugeordnet, während die höheren Primzahlen den sich langsamer bewegenden Sendern Sp zugeordnet sind.

Die Trennung zweier zufällig gleichzeitig ankommender Signale erfolgt durch den Empfänger, der hierzu nicht erfasste Einzelwerte toleriert. Dies ist auf Grund der hohen Impulsrate möglich. Die am HF-Frontend empfangenen analogen Empfangssignale werden in einer Auswerteeinheit digitalisiert und die Empfangszeitpunkte der Signale vom jeweiligen Sender zur Referenzzeit bestimmt. Für die Aufarbeitung der empfangenen Signale, die Auftrennung des empfangenen Signals in mehrere Signalquellen (Unterscheidung der Sender) und die Charakterisierung für jedes Sendesignal des momentanen Bewegungsablaufs wird eine Software mit einer bestimmten Methodik verwendet, die über mehrere Algorithmen mit variablen Parametern verfügt. Diese werden interaktiv je nach Situation angepasst und kombiniert.

Zur Gewährung der Echtzeitübertragung verfügt der Sender und Empfänger über eine Hardware, mit der der Triggerzeitpunkt zur Datenaufzeichnung exakt erfasst werden kann. Ferner ist eine Auswerteeinheit mit einer digitalen Hardware zur Aufbereitung eines Synchronisationssignals vorgesehen, das über entsprechende Schnittstellen eingespeist wird.

Bevor das System in seinen normalen Betriebsmodus übergeht, werden wichtige Daten in der Konfigurationsphase gewonnen. Dies ist zur Kalibrierung des Systems nötig, um z.B. die Laufzeit im Glasfasernetzwerk zu berücksichtigen. Hierbei wird auch ein Systemcheck durchgeführt, um evtl. Probleme in Teilen wie den Empfängern zu erkennen. Nach dieser Phase erfolgt die Synchronisation mittels der Korrelationsfunktion auf die Sender. Grundsätzlich senden die Sender zeitlich äquidistante Datenpakete, so dass eine Zuordnung möglich ist. Die Synchronisationsroutine muss für den jeweiligen Sender also einmal ein Datenpaket "gefunden" haben und kann dann den nächsten Sendezeitpunkt mit einer bestimmten Genauigkeit vorhersagen, da das Sendemuster ja bekannt ist. Dementsprechend wird die Triggerlogik angesteuert, um die digitalisierten Daten im Speicher wieder finden zu können. Anhand der Position im Speicher und der in der Korrelationsroutine ermittelten Abweichung vom Sollzeitpunkt ermittelt die Routine unter Laufzeitberechnung die Entfernungsdaten gemäß Fig. 2 ausgehend vom erwarteten Sendezeitpunkt $t_0$. Es ergibt sich damit ein Suchbereich s, innerhalb dem das nächste Signal auftauchen muss.

Algebraische Verfahren zur Lösung der Navigationsgleichungen weisen den Nachteil auf, dass sie abhängig von Infrastruktur, Geometrie und Qualität der einzelnen Messungen an den Empfängern sehr wechselhafte und in vielen Fällen unzureichende Positionsgenauigkeiten liefern. Deshalb werden algebraische Algorithmen nur zur Initialisierung und zur Überwachung anderer Algorithmen eingesetzt. Durch Verwendung mittelnder Verfahren kann in Anhängigkeit der Häufigkeit der Positionsberechnungen eine erhebliche Verbesserung erzielt werden. Des weiteren kann durch die Berücksichtigung von Qualitätsinformationen der stochastisch charakteristischen Messung eine zusätzliche Optimierung der Positionsgenauigkeit erreicht werden. Im konkreten Ausführungsbeispiel kommt der KALMAN-Filter zum Einsatz, der die beiden aufgezeigten Verbesserungen kombiniert und durch geeignete Prädiktionsmodelle der Bewegung zusätzlich die Berücksichtigung der aktuellen Situation erlaubt (situation awareness).

In Sonderfällen hochdynamischer Situationen des zu trackenden Objektes, z.B. wenn der Ball vom Tor abprallt, entstehen gesondert zu lösende Problemstellungen. Zur Lösung dieser Problemstellung ist es notwendig, zusätzliche Algorithmen zur Erfassung hochdynamischer Fälle einzuführen. Hierfür wird ein Vergleich der Bewegungssituation vor und nach einer zu überprüfenden Position durchgeführt. Durch Ermittlung der Unterschiede in beiden Bewegungsphasen (vorher, nachher) kann auf die Dynamik der Situation geschlossen werden. Ein entsprechende Nachverarbeitung dieser Situation in der umgedrehten Zeitachse kann hiermit durchgeführt werden.

Zur weiteren Verbesserung der Positionsgenauigkeiten werden Verfahren zur Kurvenglättung der einzelnen Raumkoordinaten eingesetzt. Zum einen werden Algorithmen verwendet, die unter Tolerierung einer bestimmten zeitlichen Verzögerung noch in den Echtzeitrahmen des Systems passen. Hier wird eine bereichsweise Kurvenglättung durchgeführt. Im Falle eines vorher detektierten dynamischen Falls wird das Verfahren situationsbedingt adaptiert. Eine Kurvenglättung wird in diesem Fall nicht über diesen dynamischen Zeitpunkt hinweg durchgeführt, sondern durch beidseitiges Annähern an diesen Zeitpunkt. Die noch fehlenden, nicht geglätteten Bereiche können durch geeignete Interpolationsalgorithmen logischer oder mathematischer Natur gefüllt werden. Eine wesentliche Verbesserung der Positionsgenauigkeit im dynamischen Fall ist die Folge.

Soweit zur Optimierung dieser Algorithmen erforderlich, wird eine Kombination zwischen den zu glättenden Raumkoordinaten eingeführt, welche die Erhöhung der Detektionssicherheit von dynamischen Fällen nach sich zieht.

Bedarfsweise können Verfahren zur Nachbearbeitung zum Einsatz kommen, die keine zeitliche Rechenzeiteinschränkung unterliegen und auch ausgelagert angewendet werden können. Diese liefern im Vergleich zu den echtzeitfähigen Algorithmen eine zusätzlich erhöhte Positionsgenauigkeit, da größere Bereiche zur Kurvenglättung herangezogen werden können. Auch in diesen Fällen wird sichergestellt, dass die detektierten dynamischen Fälle geeignet berücksichtigt werden.

Im Empfänger werden die Daten damit wie folgt verarbeitet:

Während der Akquisitionsphase wird die Sendezeitpunktfolge synchronisiert. Dazu werden Algorithmen mit reduzierter Zeitauflösung eingesetzt. Ziel ist lediglich, die Zeitpunkte der zukünftigen Sendezeitpunkte zu schätzen.

Im Tracking-Modus werden die Sendebursts fortlaufend mit höherer Genauigkeit erfasst und die momentane Position berechnet. Es werden nur im geschätzten bzw. vorher berechneten Sende- bzw. Eingangszeitpunkt die eingehenden Signale ausgewertet. Außerdem wird die Schätzung des nächsten Sendezeitpunktes nachgeführt.

Optional können im Zoom-Modus gespeicherte Daten noch mit zusätzlichen Algorithmen verarbeitet werden. Im Zoom-Modus können z.B. auch Daten in umgekehrter zeitlicher Reihenfolge verarbeitet werden, um sich z.B. von beiden Seiten an eine Diskontinuität (z.B. Ball prallt an Torpfosten ab) heranzutasten.

Der Empfänger erfasst daher die Daten mit hoher Abtastfrequenz und speichert sie zwischen. Entsprechend den geschätzten Sendezeitpunkten werden nun die relevanten Daten weiter verarbeitet und optional auch weiterhin gespeichert, um sie z.B. in Algorithmen des Zoom-Modus zur Verfügung zu stellen.

Die Genauigkeit kann durch Datennachbearbeitung und die Einbindung von externen Sensoren wie z.B. Beschleunigungssensoren im Ball oder von Bilddaten gesteigert werden. Das System liefert z.B. im Sekundentakt die Positionsdaten aller sich im Betrieb befindlichen Sender.

Beispielhaft wurde als Übertragungsbereich das 2,4 GHz-Band vorgeschlagen, grundsätzlich können jedoch auch andere Bänder in niedrigeren Bandbereichen eingesetzt werden, um den Stromverbrauch niedrig zu halten. Denkbar ist aber auch der Einsatz im höheren Frequenzbereich z.B. 5,8 GHz, 9,4 GHz, 24 GHz bei niedrigeren Reichweiten und höherer Entfernungsauflösung. Da die Empfänger die von den Sendern ausgesandten Signale detektieren und deren Laufzeitdifferenz ermitteln, müssen sie sehr genau untereinander synchronisiert sein, was mit einem hochstabilen Referenzsignal über die Taktleitung 13 und im Ausführungsbeispiel Glasfaserkabel erreicht werden kann. Die empfangenen Daten liefern die Empfänger $E_1$ - $E_n$ über ein Datennetzwerk an eine Zentralrecheneinheit CPU, die daraus die Position der einzelnen Sender errechnet. Diese Daten bestehen aus der Laufzeit sowie der Qualitätsbewertung der empfangenen Signale. Ein Rückkanal zwischen mobilen Sendern S, Sp, Sb und stationären Empfängern $E_1$ - $E_n$ ist für die Lokalisierung selbst nicht erforderlich und würde eine unnötige Erhöhung der Systemkomplexität und somit der Kosten bedingen.

Durch die Übertragung auf dem Prinzip der pseudo-zufälligen Zeitmultiplex mit orthogonalem Sendeburst und nicht synchronisiertem Pseudozufallsmuster wird es möglich, dass der Empfänger die Signale deutlich trennen kann. Senden tatsächlich zwei Sender gleichzeitig ein Signal ab, so erscheint der "ungewünschte Sender" als Rauschen. Zumindest ergeben sich Störabstände, die eine Detektion des Signals noch problemlos möglich machen.

Dieses Konzept hat den Vorteil, dass die Sender nur für kurze Zeit aktiv sind, so dass nur geringe Stromverbräuche anfallen. Die Sender müssen nicht synchronisiert sein, so dass ein senderseitiges Empfangsmodul entfallen kann, wodurch der Sender wesentlich vereinfacht und robuster wird. Durch die Pseudozufallsfolgen in Form der Primzahlen überlagern sich während einer Sendeperiode nicht immer die gleichen Sender, so dass die ungünstige Situation, dass sich ein weit entfernter Sender ständig mit einem nahen Sender überlagert, grundsätzlich vermeiden lässt. Damit kann das "near-far"-Problem statistisch eliminiert werden. Die Kollisionswahrscheinlichkeit der Sendebursts B wird verringert.

Das Sendesignal kann mit der Formel

$$s(t) = g(t) \, e^{j(2\pi f \cdot t)}$$

beschrieben werden, wobei g(t) das Basisbandsignal beschreibt und f die Trägerfrequenz. Das Empfangssignal für die verschiedenen Empfänger kann mit

$$e_{\upsilon}(t) = h(t) \bullet (g(t-\tau) \, e^{j(2\pi f \cdot (t-\tau))})$$

beschrieben werden, wobei h(t) die Verzerrungen durch den Übertragungskanal (Dämpfung, Frequenzgang, ...) und $\tau$ die Laufzeit zwischen Sender und Empfänger beschreibt.

Für die Bestimmung der Laufzeit $\tau$ können folgende Methoden betrachtet werden:

- Es wird nur das Basisbandsignal g(t) verwendet.

- Die Trägerphase wird mit ausgewertet.

Wenn die Trägerphase mit ausgewertet werden soll, ergibt sich folgende Situation:

Für das betrachtete ISM Band ist die Trägerfrequenz ca. 2,4GHz. Damit ergibt sich eine Periodendauer von 0,4ns. Eine Trägerphasenauswertung würde also eine Mehrdeutigkeit von 0,4ns besitzen. Eine Trägerphasenauswertung kann also nur dann zur Steigerung der Genauigkeit einbezogen werden, wenn über andere Methoden eine Genauigkeit von besser als 0,4ns erzielt wird.

Das Basisbandsignal im Empfänger kann mit der Gleichung

$$e_{\upsilon}(t) = h(t) \bullet (g(t-\tau) \, e^{j(2\pi \Delta f \cdot t + \varphi \upsilon)})$$

beschrieben werden. $\Delta f$ beschreibt hierbei den Frequenzoffset, wenn nichtsynchronisierte Oszillatoren in den Sendern verwendet werden. $\varphi_{\upsilon}$ ist der Phasenoffset zwischen den Oszillatoren.

Die Laufzeit $\tau$ kann über Korrelation $e_{\upsilon}(t)$ mit dem bekannten Sendesignal g(t) bestimmt werden. Die Genauigkeit dieser Korrelation ist ein Schlüsselparameter für die Positionsgenauigkeit. Die Genauigkeit der Korrelation wird bestimmt durch die Eigenschaften der Autokorrelierten des Signals, den Methoden, die für die Berechnung der Korrelation verwendet werden und den Störeinflüssen.

Ein grundsätzlich die Genauigkeit störendes Problem könnte die Mehrwegeausbreitung und/oder die Körperdämpfung sein, die sich durch Signale ergeben kann, die nicht unmittelbar oder nach Reflektion an deren Gegenständen dem Empfänger zugeleitet werden. Daher muss in den Empfängern $E_1 - E_n$ steht das frühest eintreffende Signale für die Entfernungsberechnung verwendet werden, auch wenn es evtl. nicht das stärkste ist. Dies wird im konkreten Ausführungsbeispiel dadurch erleichtert, dass in den Empfängern die zeitlichen Sendeburst-Abstände aller Sender bekannt sind und somit auch in etwa der Zeitpunkt bekannt ist, zu dem die Sendesignale im Empfänger "erwartet" werden.

Ein Sendeburst B dauert 25 µs, wobei 5 µs als Guardperiod für das Ein- und das Ausschalten der Sendeendstufe eingeplant sind. Die Sender-ID-Sequenz dauert 15µs und beinhaltet 750 Bit. Die restlichen 5 µs tragen 250 Bit Informationen als Daten. Somit ergibt sich eine Datenrate von 50 Megabit pro Sekunde. Bei der beispielhaft zur Verfügung stehenden Gesamtbandbreite von 80 MHz im ISM-Band bei 2,4 GHz ergibt sich somit für die HF-Übertragung der Bitsequenzen ein roll-off Faktor von a = 0,6 in der Basisbandfilterung. Für den Ball ist eine Burstwiederholfrequenz von 0,5 ms geplant, während die Spielersender eine Wiederholfrequenz von 4 ms aufweisen. Daraus ergibt sich eine Zeitausnutzung von 67,5 %. Dies ermöglicht asynchrone, durch Zufallsfolgen betriebene Sendersteuerung. Im Ergebnis ergibt sich eine resultierende minimale Ortsauflösung pro Sendeburst bei einem Ball von bis zu 20 mm und beim Spielersender bis zu 44 mm.

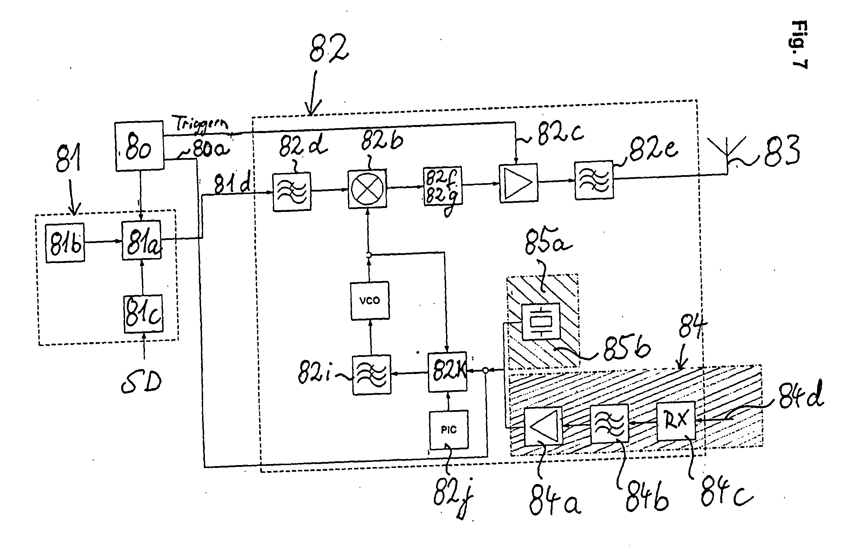

Fig. 7 zeigt ein Blockschaltbild des Sendermoduls. Das Modul besteht aus einer Ablaufsteuerung 80, einer Sendedatenerzeugung 81 und einer Sendebursterzeugung 82. Die Ablaufsteuerung 80 kontrolliert die zeitlichen Abläufe in der Schaltung. Sie bekommt den Systemtakt von der Sendebursterzeugung 82 geliefert und triggert ihrerseits sowohl die Sendedatenerzeugung 81 als auch die Sendebursterzeugung 82. Die Sendedaten werden in der Sendedatenerzeugung 81 generiert, wobei auch Sensordaten mit verarbeitet werden können. Die Daten werden dann in der Sendebursterzeugung 82 auf einen Hochfrequenzträger aufmoduliert. Hierauf erfolgt die Abstrahlung des Sendeburst über die Antenne 83.

Die Sendedatenerzeugung 81 besteht aus der Datenburstformung 81a, dem Sender-ID-Block 81b und der Sensordatenaufbereitung 81c. Die Datenburstformung 81a verarbeitet die von der Sensordatenaufbereitung 81c gelieferten Sensordaten mit der Sendeerkennung aus dem Sender-ID-Block 81b, welche eine für jeden Sender spezifische Bitfolge darstellt. Es entsteht der Datenburst, welcher an die Sendebursterzeugung 82 weitergeleitet wird. Die Sensordaten stammen im Falle des Ballsenders von einem Beschleunigungssensor und können beim Spielersender z.B. medizinische Daten beinhalten. Die Sendebursterzeugung 82 beinhaltet den Referenzoszillator 82a, die Hochfrequenzerzeugung, den Modulator 82b sowie die Endstufe 82c. Die Sendedaten werden zunächst über Datenfilter 82d gefiltert, um die Bandbreite zu verringern, um sie daraufhin auf den Hochfrequenzträger aufmodulieren zu können. Nach der BPSK-Modulation wird das Signal verstärkt und anschließend im Bandpassfilter 82e gefiltert, um Nebenaussendungen zu unterdrücken. Über die Antenne 83 wird der Sendeburst schließlich abgestrahlt. Die Ablaufsteuerung 80 kontrolliert die zeitliche Generierung der Datenbursts und die Einschaltung der Endstufe 82c entsprechend des Zeitmultiplexverfahrens. Der Taktgenerator ist korreliert mit dem Referenzsender 84, der den Synchronisationstakt 84b empfängt und einen Glasfaserempfänger 84c umfasst, mit Filter und Taktsignalaufbereitung 84d sowie einen Verstärker 84a mit dem Sender Sp,Sb mit Quarzoszillator 85a, Transistor und Quarz 85b. Das Taktsignal beeinflusst ebenfalls den Modulator 82b über PIC 82j, PD & Divider 82k und Schleifenfilter 82i, der einen Tiefpassfilter einschließt.

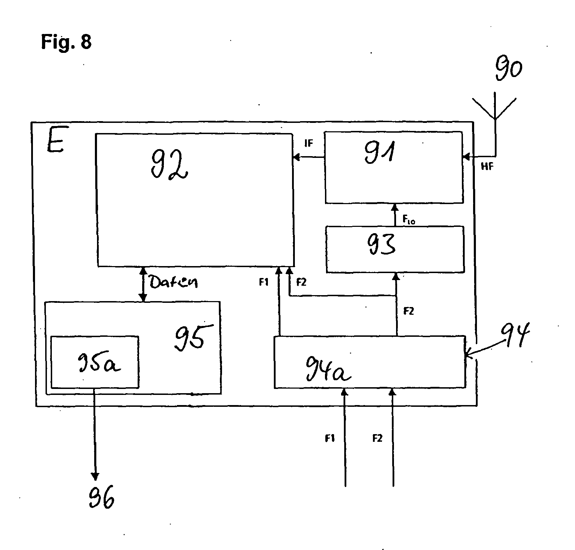

Fig. 8 zeigt die funktionalen Blöcke eines Empfängers. Über die Antenne 90 empfangene Hochfrequenzsignale werden auf eine Zwischenfrequenz umgesetzt und dort mit Hilfe eines A/D-Umsetzers digitalisiert. Die digitale Prozesseinheit 95 gewinnt daraus die zeitlichen Abstände der empfangenen Sendesignale der einzelnen Sender in Bezug auf die Synchronimpulse, die vom Empfängerblock 94, der einen LWL-Empfänger enthält, an alle Komponenten im Empfänger E verteilt werden. Außerdem werden die so generierten "rohen Laufzeitdaten" noch mit einem Qualitätsmerkmal versehen, dass die Empfangsfeldstärke bzw. Gültigkeit des entsprechenden Messwertes beinhaltet, bevor sie an den Zentralrechner weitergeleitet werden. Die empfangenen Radiosignale werden mit einem rauscharmen Verstärker verstärkt, bevor sie bandpassgefiltert werden. Nach abermaliger Verstärkung und Filterung erfolgt die Mischung in den Zwischenfrequenzbereich. Da die Digitalisierung durch Unterabtastung erfolgt, muss hier nochmals eine Filterung durchgeführt werden, bevor eine variable Verstärkung für einen konstanten Pegel am A/D-Umsetzer sorgt. Die beiden Synchronisationssignale werden dann an die digitale Signalverarbeitung als Takte weitergeleitet, wobei der 20 MHz-Takt SF2 auch als Abtastfrequenz an den A/D-Umsetzer geliefert wird. Die digitale Prozesseinheit enthält eine Netzwerkkarte 95a zur Übertragung der Datenrate als Laufzeitdaten 96. Ein Frequenzverstärker ist zwischen dem LWL-Empfänger 94a und dem HF-Abschnitt 91 angeordnet.

Angesichts der hohen Bandbreite wird mit einer Abtastrate von etwa 200 MHz gearbeitet. Im Baseband-Teil 92 der jeweiligen Empfänger werden die gelieferten Abtastwerte zuerst in einem Speicher mit Ringpufferstruktur gespeichert. Um sich auf die Sendesignale zu synchronisieren, werden zuerst die bekannten Sendeperioden im Empfangssignal gesucht und dann die Korrelation mit dem Sendemuster an prädizierten Stellen im Speicher durchgeführt. Dies führt zu einer genauen Bestimmung des Empfangszeitpunktes. Für Ball und Spieler sind die für die Korrelation notwendigen Recheneinheiten mehrmals parallel vorhanden. Diese bekommen vom Zentralrechner die zu suchenden Sendemuster mitgeteilt. Es ist dabei sicherzustellen, dass auch bei ungünstigster Konstellation noch alle Signale ausgewertet werden können. Aus den Korrelationseinheiten entsteht für die jeweiligen ausgewerteten Sendersignale der Empfangszeitpunkt mit einer Qualitätsmarke - zur Bewertung der Qualität des Messwertes -, die über den Steuer PC und über die Datennetzwerkinfrastruktur an den Zentralrechner CPU übertragen wird.

Im Hauptrechner CPU laufen alle Messwerte der Empfänger (Sender-Empfangszeitpunkt-Qualitätsmarke) zusammen. Sie werden mit Hilfe der Senderidentifikationsnummern sortiert und gruppiert, um dann für jeden Sender die Berechnung der Position mit den entsprechenden Algorithmen durchzuführen. Die ermittelten Koordinaten sind dann über eine definierte Schnittstelle abrufbar und können dann weiter ausgewertet werden.

Da die Positionsbestimmung aus einer sehr genauen Laufzeitdifferenzmessung der Sendesignale zu den Empfängern vorgenommen wird, sind zwei Referenzsignale erforderlich, die zentral an einer Stelle am System, z.B. beim Zentralrechner CPU erzeugt werden und an alle Empfänger sowie an den Zentralrechner verteilt werden. Die Frequenzen der beiden benötigten Frequenzsignale können z.B. im Bereich von 15 - 25 MHz sowie 150 - 250 MHz liegen. Die Signale werden als Rechtecksignale ausgeführt, um eindeutige Zeitmarken zu erhalten, und über die Leitung 14 den Empfängern zugeführt.

Die Referenzsender $R_1$ - $R_n$ arbeiten mit Trigger- und Taktsignalen, die vom Signalnetzwerk eingespeist werden. Die Empfänger sind vorzugsweise Geradeausempfänger, die mit dem Synchronisationsfrequenzen arbeiten. Der Empfänger kann aber auch als Einfach-Superhet-Empfänger ausgebildet sein. Dabei wird eine Zwischenfrequenz benutzt, die dann in einer zweiten Mischerstufe auf die Ausgangsfrequenz gemischt und nur noch tiefpassgefiltert werden muss.

Der Vorteil dieser Ausgestaltung ist die völlig freie Wahl der Ausgangsfrequenz. Bei vorgegebener Bandbreite von 80 MHz bedingt dies eine theoretische Abtastrate von 160 MHz. Effektiv wird die Bandbreite aber durch den analogen Vorfilter mit charakteristischer Übertragungsfunktion bestimmt.

**Bezugszeichenliste:**

| | |
|---|---|
| B | Sendeburst |
| CPU | Zentralre Recheneinheit |
| DP | Daten Port |
| DPE | Daten Verarbeitung and Bewertung |
| $D_X$, $D_Y$ | Details X, Y; |
| $E_1$- $E_n$ | Empfänger (Kalibrierung; Dekodierung, Synchronisation) |
| MT | Mittel zur Übertragung, z.B. Ethernet/Funk/RS485,... |
| R1 - Rn, Rx1-n $R_1$-$R_n$ | Referenzsender |
| RN | Empfängernetzwerk |
| s | Suchbereich |
| S, S1-S6 | Sender |
| Sb | Sender in mobilem Zielobjekt |
| Sp | Sender in mobilen Objekten |
| SDD | Signal / Daten Verteiler |
| SF1,SF2 | Synchronfrequenz LWL |
| $T_0$ | Übertragungszeitpunkt |
| $\delta tm_a$ | Zeitdifferenz |
| $am_n$ | Informationsqualität |
| 10 | Spielfeld |
| 11 | 16m-Raum |
| 12 | Empfängernetzwerk |
| 13 | Taktleitung |
| 14 | Zeitmarke |
| 15 | Power |
| 16 | Daten-Port |
| 17 | Datenleitung |
| 80 | Ablaufsteuerung |
| 80a | Takt |
| 81 | Sendedatenerzeugung |
| 81 a | Datenburstformung |
| 81 b | Sender-ID-Block |
| 81 c | Sensordatenaufbereitung |
| 81 d | Sendedaten |
| 82 | Sendebursterzeugung |
| 82a | Oszillator |
| 82b | Modulator |
| 82c | Endstufe |
| 82d | Datenfilter |
| 82e | Filter |
| 82g | Widerstand |
| 82i | Schleifenfilter |
| 83 | Antenne |
| 84a | Gleichrichter |
| 84b | Taktsignalprozessor |
| 84c | Glasfaserempfänger |
| 84d | Synchronisationstaktsignal |
| 85a | Quarzoszillator |
| 90 | Antenne |

| 91 | Hochfrequenzabschnitt HF in E |
| 92 | Basisband Anschnitt |
| 93 | Frequenzverstärker |
| 94 | Empfängerblock |
| 94a | LWL Empfängerblock |
| 95 | Prozesseinheit |
| 95a | Netzwerkkarte |
| 96 | Laufzeitdaten |

**Patentansprüche**

1. Verfahren zur kontinuierlichen Echtzeitverfolgung der Position von wenigstens einem mobilen Objekt in einem definierten mehrdimensionalen Raum, mit wenigstens einem mobilen Sender (S, Sp, Sb), der an wenigstens einem mobilen Objekt des zu analysierenden Systems angebracht wird und dessen Signale von Empfängern (E1,...,En) eines stationären Empfänger- und Signalverarbeitungsnetzwerk empfangen und zentral verarbeitet werden, wobei die von dem wenigstens einen Sender emittierten Signale elektromagnetische, in einem Frequenzbandbereich im Zeitmultiplexverfahren ausgesandte Wellen sind und das verfügbare Frequenzband als ein einziger Kanal zur Maximierung der Ortungsgenauigkeit genutzt wird,
**dadurch gekennzeichnet, dass** die Kommunikation zwischen Sender (S, Sp, Sb) und Empfängern (E1,...,En) des Empfänger- und Signalverarbeitungsnetzwerk auf dem einzigen Kanal ohne Rückkanal auf dem Prinzip des pseudo-zufälligem Zeitmultiplex mit nicht synchronisierten Pseudozufallsmustern basiert ist, bei dem eine pseudo-zufällige Folge der Sendezeitpunkte des wenigstens einen Senders verwendet wird, wobei das mobile Objekt nur sendet und das Empfänger- und Signalverarbeitungsnetzwerk nur empfängt, und dass die Sendesignale unterschiedlicher Sendebursts (B) mit niedriger Kreuzkorrelation charakterisiert sind, wobei den Empfängern das Sendemuster des Senders vorbekannt ist.

2. Verfahren nach Anspruch 1, **dadurch gekennzeichnet, dass** das Prinzip des pseudo-zufälligen Zeitmultiplex das Senden (S, Sp, Sb) zu vereinzelten, unregelmäßigen Zeitpunkten umfasst, wobei jeder Sender (S, Sp, Sb) eine andere pseudo-zufällige Folge für den Sendezeitpunkt verwendet.

3. Verfahren nach Anspruch 1 oder 2, **dadurch gekennzeichnet, dass** die Empfänger (E1,...,En) in Kenntnis des pseudo-zufälligem Zeitmultiplex und der bekannten Pseudozufallsmuster den Zeitpunkt des nächsten Sendebursts (B) eines bestimmten Senders (S, Sp, Sb) abschätzen.

4. Verfahren nach Anspruch 3, **dadurch gekennzeichnet, dass** nur die Signale ausgewertet werden, die zum vorherbestimmten Zeitpunkt des nächsten Sendebursts (B) auftreten, wobei vorzugsweise die Vorausberechnung des nächsten Sendebursts eines bestimmten Senders (S, Sp, Sb) kontinuierlich nachgeführt wird.

5. Verfahren nach einem der vorhergehenden Ansprüche, **dadurch gekennzeichnet, dass** die Sender so miniaturisiert sind, dass sie auch in einem Ball einsetzbar sind.

6. Verfahren nach einem der vorhergehenden Ansprüche, **dadurch gekennzeichnet, dass** das Frequenzband bei etwa 2,4 GHz liegt und/oder eine Bandbreite von 80 MHz hat.

7. Verfahren nach einem der vorhergehenden Ansprüche, **dadurch gekennzeichnet, dass** ortsfeste Referenzsender ($R_1$,...,$R_n$) als Positionsreferenzen zur Fehlerminimierung und zur Kalibrierung des Systems eingesetzt werden, die ebenso wie der wenigstens eine mobile Sender (S, Sp, Sb) des wenigstens einen zu analysierenden beweglichen Objekts einen Identifizierungscode in einer Folge aussenden und deren Signale zur Ermittelung ihrer Ankunftszeit an den jeweiligen Empfängern von den Empfängern ($R_1$,...,$R_n$) detektiert werden.

8. Verfahren nach einem der vorhergehenden Ansprüche, **dadurch gekennzeichnet, dass** die Referenzsender über Kabel, vorzugsweise Glasfaserkabel synchronisiert werden.

9. Verfahren nach einem der vorhergehenden Ansprüchen, **dadurch gekennzeichnet, dass** die Sendebursts (B) unter Anwendung nicht synchronisierter Pseudozufallsmuster gesendet werden, die eine Kombination der Zugriffsmechanismen Zeitmultiplex und Codemultiplex sind, wobei die Pseudozufallsmuster vorzugsweise Primzahlenfolgen sind.

**10.** Verfahren nach einem der vorhergehenden Ansprüche, **dadurch gekennzeichnet, dass** bei den Sendebursts (B) die Trennung von wenigstens zwei zufällig gleichzeitig ankommenden Signalen verschiedener Herkunft durch den Empfänger erfolgt.

**11.** Verfahren nach einem der vorhergehenden Ansprüche, **dadurch gekennzeichnet, dass** die Sendebursts (B) mit einer so hohen Impulsrate gesendet werden, dass nicht erfasste einzelne Werte toleriert werden.

**12.** Verfahren nach einem der vorhergehenden Ansprüche, **dadurch gekennzeichnet, dass** die am HF-Frontend empfangenen analogen Empfangssignale in einer Auswerteeinheit digitalisiert werden und die Empfangszeitpunkte der Signale zum jeweiligen Sender (S, Sp, Sb) bestimmt und gespeichert werden.

**13.** Verfahren nach Anspruch 12, **dadurch gekennzeichnet, dass** für die Aufarbeitung der empfangenen und gespeicherten Signale je nach Situation unterschiedliche Algorithmen eingesetzt werden können.

**14.** Verfahren nach einem der Ansprüche 12 oder 13, **dadurch gekennzeichnet, dass** für die Bearbeitung der empfangenen Signale das Signal in sich ggf. überlappende Abschnitte zerlegt wird und für die einzelnen Abschnitte ein jeweils bester Algorithmus oder mehrere Algorithmen gleichzeitig angewendet werden.

**15.** Verfahren nach einem der Ansprüche 12 bis 14, **dadurch gekennzeichnet, dass** für die Bearbeitung einzelner Abschnitte der empfangenen Signale auch eine umgedrehte Zeitachse anwendbar ist, so dass z.B. Diskontinuitäten in hochdynamischen Vorgängen von zwei Seiten angenähert werden.

**16.** Vorrichtung zum Senden von elektromagnetischen Wellen zur Verwendung in einem Verfahren zur kontinuierlichen Echtzeitverfolgung der Position von wenigstens einem mobilen Objekt in einem definierten mehrdimensionalen Raum mit

- wenigstens einem mobilen Sender, der an wenigstens einem mobilen Objekt des zu analysierenden Systems angebracht ist,
- mehreren Empfängern (E1,...,En) eines stationären Empfänger- und Signalverarbeitungsnetzwerk zum Empfang und zur Verarbeitung der vom Sender ausgesandten Signale, die in einem Frequenzbandbereich im Zeitmultiplexverfahren ausgesandte Wellen sind,
- einem einzigen Kanal auf dem verfügbaren Frequenzband,

**dadurch gekennzeichnet, dass** Kommunikationsmittel vorgesehen sind, die eine Übertragung von dem Sender (S, Sp, Sb) des nur sendenden mobilen Objekts zu den Empfängern (E1,...,En) des nur empfangenden Empfänger- und Signalverarbeitungsnetzwerk auf dem Prinzip des pseudo-zufälligem Zeitmultiplex mit nicht synchronisierten Pseudozufallsmustern, bei dem eine pseudo-zufällige Folge der Sendezeitpunkte des wenigstens einen Senders verwendet wird, auf dem einzigen Kanal ohne Rückkanal durchführen, und dass Sendemittel vorgesehen sind, die die Sendesignale als unterschiedliche Sendebursts (B) mit niedriger Kreuzkorrelation übertragen, wobei den Empfängern das Sendemuster des Senders vorbekannt ist.

**17.** Vorrichtung nach Anspruch 16, **dadurch gekennzeichnet, dass** Referenzsender ($R_1,...,R_n$) mit Trigger- und Taktsignalen vorgesehen sind, die von dem Signalnetzwerk eingespeist werden.

## Claims

**1.** A method for the continuous real time tracking of the position of at least one mobile object in a defined multidimensional space, comprising at least one mobile transmitter (S, Sp, Sb)which is attached to at least one mobile object of the system to be analyzed and whose signals are received by receivers (E, ..., En) of a stationary receiving and signal processing network and are processed centrally, wherein the signals emitted by the at least one transmitter are electromagnetic waves which are transmitted within a frequency band range utilizing a time division multiplex technique and wherein the available frequency band is used as a single channel for the purposes of maximizing the accuracy of the position detection,

**characterized in that** the communication between transmitter (S, Sp, Sb) and the receivers ($E_1,..., E_n$) of the stationary receiving and signal processing network on the single channel without feedback channel is based on the principle of pseudo-random time division multiplex using non synchronized pseudo-random patterns, wherein a pseudo-random sequence of transmission time points of the at least one transmitter is used, wherein the mobile object only transmits and the stationary receiving and signal processing network only receives, and **in that** the transmission signals of different burst transmissions (B) are **characterized by** a low cross correlation, wherein the transmission pattern of the transmitter is pre-known to the receivers.

2. A method in accordance with claim 1, **characterized in that** the principle of pseudo-random time division multiplex comprises the transmitting (S, Sp, Sb) at isolated, irregular time points, wherein each transmitter (S, Sp, Sb) uses a different pseudo-random sequence for the transmitting time point.

3. A method in accordance with claim 1 or 2, **characterized in that** the receivers ($E_1$,..., $E_n$) estimate the time point of the next burst transmission (B) from a certain transmitter (S, Sp, Sb) in the knowledge of the pseudo-random time division multiplex and the known pseudo-random pattern.

4. A method in accordance with claim 3, **characterized in that** only those signals are evaluated which arise at the predetermined time point of the next burst transmission (B), wherein preferably the precalculation of the next burst transmission from a certain transmitter (S, Sp, Sb) is updated continuously.

5. A method in accordance with any of the preceding claims, **characterized in that** the transmitters are miniaturized in such a manner that they are adapted to be inserted even into a ball.

6. A method in accordance with any of the preceding claims, **characterized in that** the frequency band lies at approximately 2.4 GHz and/or has a bandwidth of 80 MHz.

7. A method in accordance with any of the preceding claims, **characterized in that** stationary reference transmitters (R1, ..., Rn) are used as position references for the purposes of minimizing errors and for the calibration of the system, said reference transmitters transmitting an identification code in a sequence in like manner to the at least one mobile transmitter (S, Sp, Sb) for the at least one mobile object that is to be analyzed, and the signals from said reference transmitters being detected by the receivers (R1, ..., Rn) for the purposes of determining their time of arrival at the respective receivers.

8. A method in accordance with any of the preceding claims, **characterized in that** the reference transmitters are synchronized over cables, preferably glass fiber cables.

9. A method in accordance with any of the preceding claims, **characterized in that** the burst transmissions (B) are sent utilizing non synchronized pseudo-random patterns which are a combination of the access mechanisms time division multiplex and code division multiplex, wherein the pseudo-random patterns are preferably prime number sequences.

10. A method in accordance with any of the preceding claims, **characterized in that**, in the case of the burst transmissions (B), the separation of at least two signals of different origin arriving randomly at the same time is effected by the receiver.

11. A method in accordance with any of the preceding claims, **characterized in that** the burst transmissions (B) are transmitted at a pulse rate which is so high that undetected individual values are tolerated.

12. A method in accordance with any of the preceding claims, **characterized in that** the analogue reception signals received at the HF front-end are digitized in an evaluating unit, and the time points, at which the signals from the respective transmitters (S, Sp, Sb) are received, are determined and stored.

13. A method in accordance with claim 12, **characterized in that** different algorithms can be used for the processing of the received and stored signals in dependence on the situation.

14. A method in accordance with any of the claims 12 or 13, **characterized in that** the signal is divided into, possibly overlapping, sections for the processing of the received signals, and the best respective algorithm or a plurality of algorithms are used simultaneously for the individual sections.

15. A method in accordance with any of the claims 12 to 14, **characterized in that** for the processing of individual sections of the received signals also a rotated time axis is used so that e.g. discontinuities in highly dynamic processes are approached from two sides.

**16.** A device for transmitting electromagnetic waves for use in a method for the continuous real time tracking of the position of at least one mobile object in a defined multidimensional space comprising

- at least one mobile transmitter which is attached to at least one mobile object in the system to be analyzed,
- several receivers (E1, ..., En) of a stationary receiving and signal processing network for receiving and processing the signals transmitted by the transmitter, said signals being waves transmitted in a frequency band range using a time division multiplex technique,
- a single channel on the available frequency band,

**characterized in that** there are provided communication means which carry out a transmission between the transmitter (S, Sp, Sb) of the only transmitting mobile object and the receivers (E1, ..., En) of the receiving and signal processing network that is only receiving in using the principle of pseudo-random time division multiplex with non synchronized pseudo-random patterns on the single channel without feedback channel, wherein a pseudo-random sequence of transmission time points of the at least one transmitter is used, and **in that** there are provided transmitter means which transmit the transmission signals in the form of different burst transmissions (B) having a low cross correlation, wherein the transmission pattern of the transmitter is pre-known to the receivers.

**17.** A device in accordance with claim 16, **characterized in that** reference transmitters (R1,..., Rn) are provided with trigger and clock pulse signals which are fed in from the signal network.

## Revendications

**1.** Procédé pour le suivi en temps réel continu de la position d'au moins un objet mobile dans un espace défini pluridimensionnel, comprenant au moins un émetteur (S, Sp, Sb) mobile, qui est placé sur au moins un objet mobile du système à analyser et dont les signaux sont reçus par des récepteurs (E1,...En) d'un réseau fixe récepteur et de traitement de signal et sont traités de façon centrale, les signaux émis par le au moins un émetteur étant des ondes électromagnétiques, envoyés dans une plage de bande de fréquence dans le procédé de multiplexage temporel et la bande de fréquence disponible étant utilisée comme un seul canal pour la maximisation de la précision de localisation, **caractérisé en ce que** la communication entre l'émetteur (S, Sp, Sb) et les récepteurs (E1,...En) du réseau récepteur et de traitement de signal est basée sur le canal unique sans canal retour sur le principe du multiplexage temporel pseudo-aléatoire avec des modèles pseudo-aléatoires non synchronisés, dans lequel une séquence pseudo-aléatoire des moments d'émission du au moins un émetteur est utilisée, l'objet mobile émettant seulement et le réseau récepteur et de traitement de signal recevant seulement, et **en ce que** les signaux d'émission de différentes rafales d'émission (B) sont **caractérisés** avec une faible corrélation croisée, le modèle d'émission de l'émetteur étant déjà connu des récepteurs.

**2.** Procédé selon la revendication 1, **caractérisé en ce que** le principe du multiplexage temporel pseudo-aléatoire comprend l'émission (S, Sp, Sb) à des moments individuels irréguliers, chaque émetteur (S, Sp, Sb) utilisant une autre séquence pseudo-aléatoire pour le moment d'émission.

**3.** Procédé selon la revendication 1 ou 2, **caractérisé en ce que** les émetteurs (E1,...En) évaluent avec la connaissance du multiplexage temporel pseudo-aléatoire et des modèles pseudo-aléatoires connus le moment de la prochaine rafale d'émission (B) d'un émetteur (S, Sp, Sb) défini.

**4.** Procédé selon la revendication 3, **caractérisé en ce qu'**on analyse seulement les signaux qui apparaissent au moment défini auparavant de la prochaine rafale d'émission (B), le calcul préalable de la prochaine rafale d'émission de l'émetteur (S, Sp, Sb) défini étant de préférence asservi de façon continue.

**5.** Procédé selon l'une quelconque des revendications précédentes, **caractérisé en ce que** les émetteurs sont miniaturisés de telle sorte qu'ils peuvent être utilisés également dans une balle.

**6.** Procédé selon l'une quelconque des revendications précédentes, **caractérisé en ce que** la bande de fréquence se situe à environ 2,4 GHz et/ou à une largeur de bande de 80 MHz.

**7.** Procédé selon l'une quelconque des revendications précédentes, **caractérisé en ce que** des émetteurs de référence (R1,...Rn) fixes sont utilisés comme références de position pour la minimisation des erreurs et pour l'étalonnage du

**EP 1 556 713 B1**

système, qui émettent de la même façon que le au moins un émetteur mobile (S, Sp, Sb) du au moins un objet mobile à analyser un code d'identification dans une séquence et dont les signaux sont détectés pour déterminer leur heure d'arrivée sur les récepteurs respectifs par les récepteurs (R1,...Rn).

8. Procédé selon l'une quelconque des revendications précédentes, **caractérisé en ce que** les émetteurs de référence sont synchronisés par câble, de préférence par câble en fibre de verre.

9. Procédé selon l'une quelconque des revendications précédentes, **caractérisé en ce que** les rafales d'émission (B) sont envoyées avec l'utilisation de modèles pseudo-aléatoires non synchronisés, qui sont une combinaison des mécanismes d'accès multiplexage temporel et multiplexage de code, les modèles pseudo-aléatoires étant de préférence des séquences de nombres premiers.

10. rocédé selon l'une quelconque des revendications précédentes, **caractérisé en ce que**, avec les rafales d'émission (B), la séparation d'au moins deux signaux, arrivant de façon aléatoire et simultanée, d'origine différente est effectuée par le récepteur.

11. Procédé selon l'une quelconque des revendications précédentes, **caractérisé en ce que** les rafales d'émission (B) sont reliées avec un taux d'impulsion si élevé que des valeurs individuelles non enregistrées sont tolérées.

12. Procédé selon l'une quelconque des revendications précédentes, **caractérisé en ce que** les signaux d'émission analogiques reçus sur le frontal HF sont numérisés dans une unité d'analyse et les moments de réception des signaux allant à l'émetteur respectif (S, Sp, Sb) sont définis et stockés.

13. Procédé selon la revendication 12, **caractérisé en ce que** différents algorithmes peuvent être utilisés selon la situation pour le traitement des signaux reçus et stockés.

14. Procédé selon l'une quelconque des revendications 12 ou 13, **caractérisé en ce que**, pour le traitement des signaux reçus, le signal est décomposé en tronçons qui se superposent éventuellement et un algorithme respectivement optimal ou plusieurs algorithmes sont utilisés en même temps pour les différents tronçons.

15. Procédé selon l'une quelconque des revendications 12 à 14, **caractérisé en ce que**, pour le traitement de tronçons individuels des signaux reçus, on peut utiliser également un axe de temps non tourné, de sorte que par exemple des discontinuités sont approchées dans des processus très dynamiques par les deux côtés.

16. Dispositif pour l'émission d'ondes électromagnétiques pour l'utilisation dans un procédé pour le suivi continu en temps réel de la position d'au moins un objet mobile dans un espace défini en pluridimensionnel comprenant

- au moins un émetteur mobile, qui est placé sur au moins un objet mobile du système à analyser,
- plusieurs émetteurs (E1, ...En) d'un réseau stationnaire récepteur et de traitement de signal pour la réception et pour le traitement des signaux envoyés par l'émetteur, qui sont des ondes émises dans une plage de bande de fréquence dans le procédé de multiplexage temporel,
- un seul canal sur la bande de fréquence disponible,

**caractérisé en ce que** des moyens de communication sont prévus, lesquels effectuent une transmission de l'émetteur (S, Sp, Sb) de l'objet mobile émettant seulement aux récepteurs (E1,...En) du réseau récepteur et de traitement de signal recevant seulement sur le principe du multiplexage temporel pseudo-aléatoire avec des modèles pseudo-aléatoires non synchronisés, sur lequel une séquence pseudo-aléatoire des moments d'émission du au moins un émetteur est utilisée, sur l'unique canal sans canal retour, et qu'il est prévu des moyens d'émission qui transmettent les signaux d'émission sous la forme de rafales d'émission différentes (B), avec faible corrélation croisée, le modèle d'émission de l'émetteur étant pré-connu des récepteurs.

17. Dispositif selon la revendication 16, **caractérisé en ce que** les émetteurs de référence (R1,...Rn) avec des signaux de déclenchement et de synchronisation sont prévus, lesquels sont injectés par le réseau de signal.

EP 1 556 713 B1

**Fig.1**

16

## Fig. 2

**B**

25µs

**S**

$t_0$    $t_0$+0.5 $t_1$    t/m

## Fig. 3

RN

Rx$_1$    Rx$_2$    Rx$_n$

DPE

13

14

15

CPU

T$_M$    DP

SDD

17

| Rx$_n$ | | |
|---|---|---|
| Tx1 | δt1$_n$ | a1$_n$ |
| Tx2 | δt2$_n$ | a2$_n$ |
| . | . | |
| . | . | |
| . | . | |
| Txm | δtm$_n$ | am$_n$ |

**Fig. 4**

$D_X$    $D_Y$

S 1
S 2
S 3
S 4
S 5
S 6

**Fig. 5**

CPU

**Fig. 6**

Fig. 7

**Fig. 8**